# EUROPEAN PATENT SPECIFICATION

(11) **EP 1 940 177 B1**
(45) Date of publication and mention of the grant of the patent: **11.01.2012**
(21) Application number: 08004286.4
(22) Date of filing: 15.05.1998
(51) Int. Cl.: H04N 7/26

(54) **Apparatus for encoding interlaced macroblock texture information**
Vorrichtung zur Kodierung von Zeilensprung-Makroblock-Texturinformationen
Appareil pour coder des informations de texture macrobloc entrelacées

(30) Priority: 14.03.1998 KR 19980008637
(43) Date of publication of application: 02.07.2008
(62) Divisional of application: 98921904.3
(73) Proprietor: Daewoo Electronics Corporation, Seoul (KR)
(72) Inventor: Lee, Sang Hoon, Seoul 121-709 (KR)
(74) Representative: Samson & Partner

(56) References cited:
- AD HOC GROUP ON MPEG-4 VIDEO VM EDITING: "MPEG-4 Video Verification Model Version 7.0 Chapter 3: Encoder Definition" INTERNATIONAL ORGANIZATION FOR STANDARDIZATION - ORGANISATIONINTERNATIONALE DE NORMALISATION, XX, XX, 1 April 1997 (1997-04-01), pages 1,17-122, XP002084924
- WEI-GE CHEN ET AL: "Repetitive and morphological padding for object-based video coding" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US LNKD- DOI:10.1109/ICIP.1997.647784, vol. 1, 26 October 1997 (1997-10-26), pages 373-376, XP010254185 ISBN: 978-0-8186-8183-7
- KAUP A: "ADAPTIVE LOW-PASS EXTRAPOLATION FOR OBJECT-BASED TEXTURE CODING OF MOVING VIDEO" PROCEEDINGS OF THE INTERNATIONAL SOCIETY FOR OPTICAL ENGINEERING (SPIE), SPIE, USA LNKD- DOI:10.1117/12.263285, vol. 3024, no. PART 02, 12 February 1997 (1997-02-12), pages 731-741, XP001130815 ISSN: 0277-786X
- YANBIN YU ET AL: "PICTORIAL TRANSFORM CODING FOR TESSELLATING ARBITRARY SHAPED REGIONS" SIGNAL PROCESSING THEORIES AND APPLICATIONS. BARCELONA, SEPT. 18 - 21, 1990; [PROCEEDINGS OF THE EUROPEAN SIGNAL PROCESSING CONFERENCE], AMSTERDAM, ELSEVIER, NL, vol. 2, 18 September 1990 (1990-09-18), pages 901-904, XP000365734
- THOMAS SIKORA: "The MPEG-4 Video Standard Verification Model" IEEE TRANSACTIONS ON CIRCUITS AND SYSTEMS FOR VIDEO TECHNOLOGY, IEEE SERVICE CENTER, PISCATAWAY, NJ, US, vol. 7, no. 1, 1 February 1997 (1997-02-01), XP011014363 ISSN: 1051-8215
- MOCCAGATTA I ET AL: "MPEG-4 VIDEO VERIFICATION MODEL: STATUS AND DIRECTIONS" INTERNATIONAL JOURNAL OF IMAGING SYSTEMS AND TECHNOLOGY, WILEY AND SONS, NEW YORK, US LNKD- DOI:10.1002/(SICI)1098-1098(1997)8:5<468:: AID-IMA9>3.0.CO;2-8, vol. 8, no. 5, 1 January 1997 (1997-01-01) , pages 468-479, XP001042079 ISSN: 0899-9457

## Description

### TECHNICAL FIELD OF THE INVENTION

The present invention relates to an apparatus for encoding interlaced macroblock texture information.

### BACKGROUND ART

In digitally televised systems such as video-telephone, teleconference and high definition television systems, a large amount of digital data is needed to define each video frame signal since a video line signal in the video frame signal comprises a sequence of digital data referred to as pixel values. Since, however, the available frequency bandwidth of a conventional transmission channel is limited, in order to transmit the large amount of digital data therethrough., it is necessary to compress or reduce the volume of data through the use of various data compression techniques, especially in the case of such low bit-rate video signal encoders as video-telephone and teleconference systems.

One of such techniques for encoding video signals for a low bit-rate encoding system is the so-called object-oriented analysis-synthesis coding technique, wherein an input video image is divided into objects, and three sets of parameters for defining the motion, contour and pixel data of each object are processed through different encoding channels.

One example of object-oriented coding scheme is the so-called MPEG(Moving Picture Express Group) phase 4 (MPEG-4), which is designed to provide an audio-visual coding standard for allowing content-based interactivity, improved coding efficiency and/or universal accessibility in such applications as low-bit rate communication, interactive multimedia(e.g., games, interactive TV, etc.) and area surveillance(see, for instance, MPEG-4 Video Verification Model Version 7.0, International Organisation for Standardisation, ISO/IEC JTC1/SC29/WG11 MPEG97/N1642, April 1997).

According to the MPEG-4, an input video image is divided into a plurality of video object planes(VOP's), which correspond to entities in a bitstream that a user can access and manipulate. A VOP can be referred to as an object and represented by a bounding rectangle whose width and height may be the smallest multiple of 16 pixels(a macroblock size) surrounding each object so that the encoder may process the input video image on a VOP-by-VOP basis, i.e., an object-by-object basis.

Each VOP in the MPEG-4 is described by three sets of parameters defining shape information, motion information and texture information, i.e., color information thereof, wherein the shape information represented by, e.g., a binary mask corresponds to the contour of said each VOP, i.e., the boundary of an object; the motion information represents spatial correlation between a current frame and a corresponding previous frame; and the texture information consists of luminance and chrominance data.

Meanwhile, since the texture information for two input video images sequentially received has naturally time redundancy, it is desirable to get rid of the time redundancy therein by using a motion estimation and compensation technique in order to efficiently encode the texture information in the MPEG-4.

A progressive image padding technique, i.e., a conventional repetitive padding technique, is applied on a frame-by-frame basis to the VOP prior to the motion estimation and compensation. In principle, the repetitive padding technique fills the transparent area outside the object of the VOP by repeating boundary pixels of the object, wherein the boundary pixels are located on the contour of the object. It is preferable to perform the repetitive padding technique with respect to the reconstructed shape information, which is generated by decoding the encoded shape information in the reverse order along the encoding scheme. Each boundary pixel is repeated towards the exterior of the object. If transparent pixels in the transparent area outside the object can be filled by the repetition of more than one boundary pixel, taking the average of the repeated values as a padded value is preferred. This progressive padding process is generally divided into 3 steps, i.e., a horizontal repetitive padding; a vertical repetitive padding and an exterior padding(see, MPEG-4 Video Verification Model Version 7.0).

While the progressive padding technique is used to perform the motion estimation and compensation based on each frame generated for every 1/30 seconds as described above, an interlaced padding technique is required to perform the motion estimation and compensation on a field-by-field basis, wherein two fields, i.e., a top and a bottom field are combined to be reconstructed as a frame, i.e., an interlaced texture image. The interlaced encoding technique to perform the motion estimation and compensation on a field-by-field basis may be suitably used to encode precisely the interlaced texture information either for the fast movement such as a sport, horse racing and car racing or with a rarely field correlation, i.e., with a rarely temporal correlation between the top and the bottom fields.

However, if the padding for each field block is performed independently without considering its field correlation based on the interlaced texture information as described in the progressive padding technique, there may exist some pixel which will not be modified based on only the object pixels of the object, but will be modified by padding when taking account of their field correlation, needing two consecutive fields, i.e., the top and the bottom fields, included in the interlaced texture information.

"MPEG-4 Video Verification Model Version 7.0 Chapter 3: Encoder Definition", ad hoc group on MPEG-Video VM editing, international organisation for standardization, pages 1, 17-122, 1 April 1997, discloses a repetitive padding technique for VOPs prior to motion estimation/compensation (section 3.3.2), a low pass extrapolation padding technique before performing DCT (section 3.4.1) and an adaptive frame/field DCT for interlaced video (section 3.4.1).

### DISCLOSURE OF THE INVENTION

It is, therefore, an object of the invention to provide an apparatus for encoding interlaced texture information on a texture macroblock basis.

In accordance with the invention, there is provided an apparatus according to claim 1, preferred embodiments thereof being defined in the dependent claims.

### BRIEF DESCRIPTION OF THE DRAWINGS

The above and other objects and features of the present invention will become apparent from the following description of preferred embodiments given in conjunction with the accompanying drawings, in which:
Fig. 1 shows a schematic block diagram of a conventional apparatus for encoding interlaced texture information of an object in a video signal;
Fig. 2 presents a flow chart for illustrating the operation of the previous frame processing circuit shown in Fig. 1 in accordance with the present invention;
Figs. 3A and 3B describe an exemplary boundary macroblock and a top and a bottom boundary field blocks for the boundary macroblock, respectively;
Figs. 3C to 3E represent a padding procedure of the top and the bottom boundary field blocks sequentially in accordance with the present invention; and
Fig. 4 depicts a plurality of undefined adjacent blocks for an exemplary VOP and the padding directions for each undefined adjacent block.

### MODE OF CARRYING OUT THE INVENTION

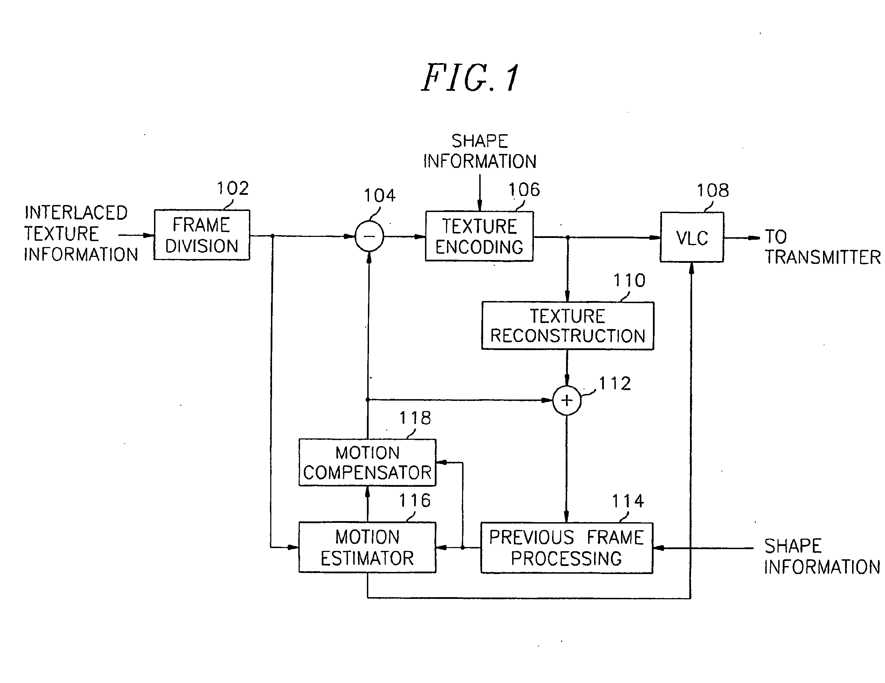

Referring to Fig. 1, there is shown a schematic block diagram of an apparatus for encoding interlaced texture information on a current frame, wherein the interlaced texture information may be referred as a current VOP in MPEG-4. The interlaced texture information is partitioned into a plurality of texture macroblocks to be applied to a frame division circuit 102, wherein each texture macroblock has M x N texture pixels, M and N being positive even integers typically ranging between 4 and 16.

The frame division circuit 102 divides each texture macroblock into a top and a bottom field block, wherein the top field block having M/2 x N texture pixels contains every odd row of said each texture macroblock and the bottom field block having the other M/2 x N texture pixels contains every even row of said each texture macroblock. The top and the bottom field blocks for said each texture macroblock are sequentially provided as a current top and a current bottom field blocks, respectively, to a subtractor 104 and a motion estimator 116.

Essentially at the same time, previous interlaced texture information is read out from a previous frame processing circuit 114 and provided to the motion estimator 116 and a motion compensator 118, wherein the previous interlaced texture information of a previous frame has previous texture pixels and precedes the interlaced texture information of the current frame by one frame period. The previous frame is also partitioned into a plurality of search regions and each search region is divided into a top and a bottom search region, wherein the top search region having P(M/2 x N) previous texture pixels contains every odd row of said each search region and the bottom search region having the other P(M/2 x N) previous texture pixels contains every even row of said each search region, P being a positive integer, typically, 2.

The motion estimator 116 determines motion vectors for the current VOP on a field-by-field basis. First, the motion estimator 116 detects a previous texture macroblock in the previous frame for each current top or bottom field block, wherein the previous texture macroblock is located at a same position as said each current top or bottom field block. Then the previous texture macroblock is divided into a previous top and a previous bottom field blocks; and errors between said each current top or bottom field block and two previous top and bottom field blocks are calculated. Since the top and the bottom search regions have a plurality of candidate top and candidate bottom field blocks including the previous top and the previous bottom field blocks, respectively, said each current top or bottom field block is displaced on a pixel-by-pixel basis within the top and the bottom search regions in accordance with each candidate top and each candidate bottom field block, respectively; and, at each displacement, two errors between said each current top or bottom field block and said each candidate top and said each candidate bottom field blocks are compared with each other.

As described above, the motion estimator 116 performs motion estimation of said each current top or bottom field block with respect to its previous top and bottom field blocks and selects, as an optimum candidate field block or a most similar field block, a candidate top or bottom field block which yields a minimum error. Outputs from the motion estimator 116 are a motion vector and a field indication flag being provided to the motion compensator 118 and a variable length coding(VLC) circuit 108, wherein the motion vector denotes a displacement between said each current top or bottom field block and the optimum candidate field block and the field indication flag represents whether the optimum candidate field block belongs to the top search region or not.

The motion compensator 118 performs a motion compensation by making the optimum candidate field block shift by the motion vector toward said each current top or bottom field block depending on the field indication flag, to thereby provide a motion-compensated optimal candidate field block as a predicted top or bottom field block for said each current top or bottom field block to the subtractor 104 and an adder 112.

The subtractor 104 obtains an error field block by subtracting the predicted top or bottom field block from said each current top or bottom field block on a corresponding pixel-by-pixel basis, to provide the error field block to a texture encoding circuit 106.

In the texture encoding circuit 106, the error field block may be subjected to an orthogonal transform for removing spatial redundancy thereof and then transform coefficients are quantized, to thereby provide the quantized transform coefficients to the VLC circuit 108 and a texture reconstruction circuit 110. Since a conventional orthogonal transform such as a discrete cosine transform(DCT) is performed on a DCT block-by-DCT block basis, each DCT block having typically 8 x 8, i.e., M/2 x N/2, texture pixels, the error field block having 8 x 16 error texture pixels may be preferably divided into two DCT blocks in the texture encoding circuit 106. If necessary, before performing the DCT, each error field block may be DCT-padded based on the shape information or the reconstructed shape information of each VOP in order to reduce higher frequency components which may be generated in the DCT processing. For example; a predetermined value, e.g., '0', may be assigned to the error texture pixels at the exterior of the contour in each VOP.

The VLC circuit 108 performs a statistical encoding on the quantized transform coefficients fed from the texture encoding circuit 106 and the field indication flag and the motion vector, for said each current top or bottom field block, fed from the motion estimator 116 by using, e.g., a conventional variable length coding technique, to thereby provide statistically encoded data to a transmitter(not shown) for the transmission thereof.

In the meantime, the texture reconstruction circuit 110 performs an inverse quantization and inverse transform on the quantized transform coefficients to provide a reconstructed error field block, which corresponds to the error field block, to the adder 112. The adder 112 combines the reconstructed error field block from the texture reconstruction circuit 110 and the predicted top or bottom field block from the motion compensator 118 on a pixel-by-pixel basis, to thereby provide a combined result as a reconstructed top or bottom field block for said each current top or bottom field block to the previous frame processing circuit 114.

The previous frame processing circuit 114 sequentially modifies the reconstructed top or bottom field block based on the shape information or the reconstructed shape information for the current VOP, to thereby provide all the modified top and bottom field blocks as another previous interlaced texture information for a subsequent current VOP to the motion estimator 116 and the motion compensator 118.

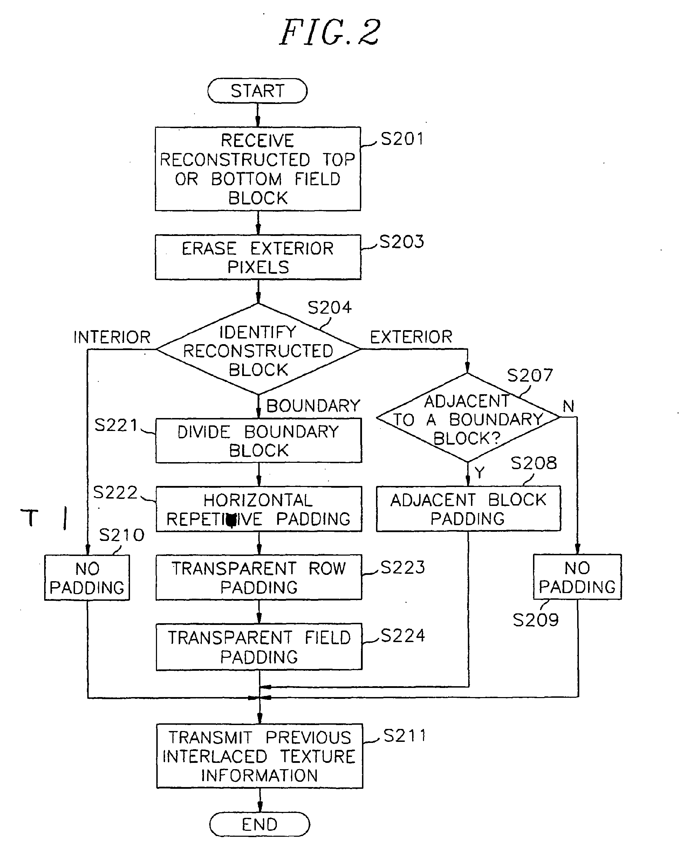

Referring to Fig. 2, there is a flow chart illustrating an important aspect of the invention related to the operation of the previous frame processing circuit 114 shown in Fig. 1, i.e., explaining a padding procedure for texture information on a previous frame on a macroblock-by-macroblock basis.

At step S201, the reconstructed top or bottom field block for the current top or bottom field block is sequentially received and, at step S203, exterior pixels in the reconstructed top or bottom field block are removed based on the shape information of the current VOP, wherein the exterior pixels are located at the outside of the contour for the current VOP. The reconstructed shape information may be used on behalf of the shape information, wherein the shape information is encoded in accordance with an encoding scheme to generate the encoded shape information and the encoded shape information is reconstructed as the reconstructed shape information by being decoded in the reverse order along the encoding scheme. While the exterior pixels are removed to be set as transparent pixels, i.e., undefined texture pixels, the remaining interior pixels in the reconstructed top or bottom field block are provided as defined texture pixels on a field block-by-field block basis.

At step S204, each reconstructed block is determined whether or not being located on the contour of the current VOP, wherein said each reconstructed block has the reconstructed top field block and the corresponding reconstructed bottom field block. In other words, said each reconstructed block is determined as an interior block, a boundary block, or an exterior block, wherein the interior block has only the defined texture pixels, the exterior block has only the undefined texture pixels and the boundary block has both the defined texture pixels and the undefined texture pixels. If the reconstructed block is determined as an interior block, at step S210, no padding is performed and the process goes to step S211.

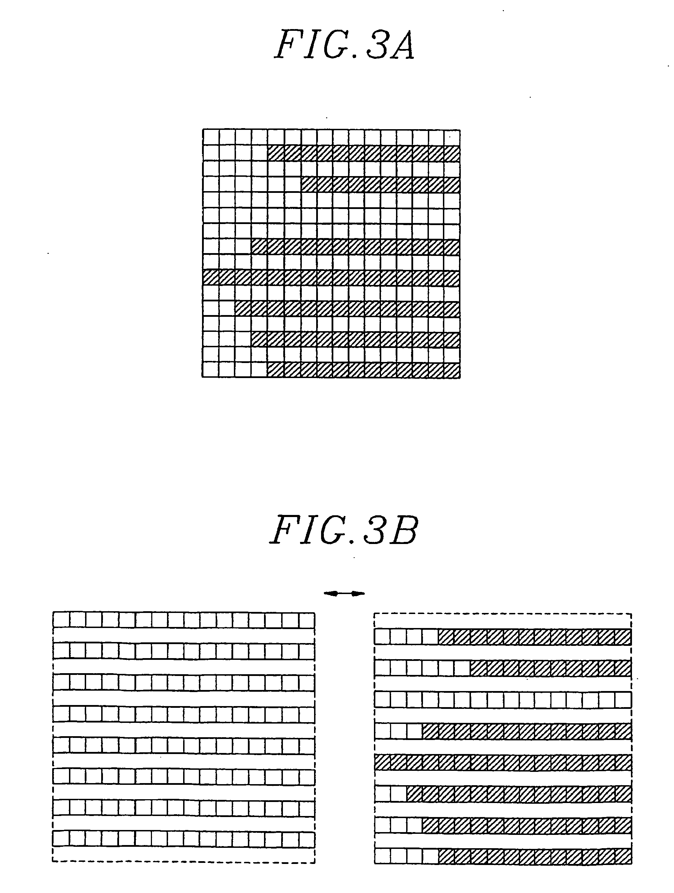

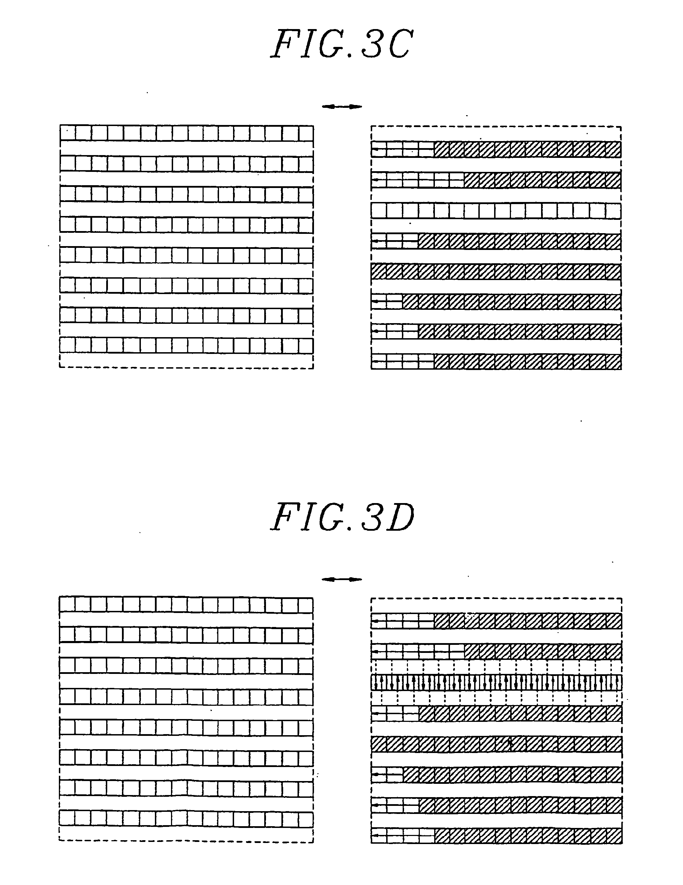

If the reconstructed block is a boundary block as shown in Fig. 3A, at steps S221 to S224, the undefined texture pixels of the boundary block are extrapolated from the defined texture pixels thereof to generate an extrapolated boundary block. First, at step S221, each boundary block is divided into a top and a bottom boundary field blocks as shown in Fig. 3B, each boundary field block having M/2 x N texture pixels. At step S222, the undefined texture pixels are padded on a row-by-row basis by using a horizontal repetitive padding technique as shown in Fig. 3C to generate a padded row for each row. In other words, the undefined texture pixels are filled by repeating boundary pixels toward the arrows as shown in Fig. 3C, wherein each boundary pixel among the defined texture pixels is located on the contour, i.e., the border, of the current VOP. If any undefined texture pixel may be filled by the repetition of more than one boundary pixel, the average value of the repeated values is used.

If there exist one or more transparent rows on each top or bottom field block, at step S223, each transparent row is padded by using one or more nearest defined or padded rows among the corresponding top or bottom field block, wherein the defined row has all the defined texture pixels therein. For example, as shown in Fig. 3D, each undefined texture pixel of the transparent row shown in the bottom field block is replaced with an average of two defined or padded texture pixels based on a nearest upward and a nearest downward padded rows, i.e., the 2nd and the 4th padded rows in the bottom field block. If the transparent row is located at the highest or the lowest row, i.e., corresponds to the 1st row 1 or the 8th row, said each texture pixel is replaced with a defined or padded texture pixel of the nearest padded or defined row.

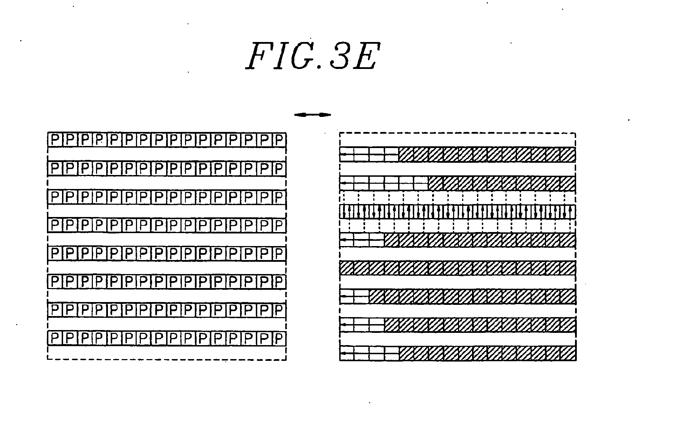

If there exists only one transparent boundary field block of the two boundary field blocks as shown in Fig. 3B, at step S224, the transparent boundary field block is padded based on another boundary field block of the boundary block, wherein the transparent boundary field block, i.e., an undefined field block having no defined texture pixel therein. In other words, if a top field block is transparent, all the undefined texture pixels of the transparent boundary field block, i.e., the top field block, may be replaced with a constant value P as shown in Fig. 3E, e.g., a mean value of the defined texture pixels within the bottom field block. The mean value of both the defined and the padded pixels within the bottom field block can also be used to fill the transparent field block. If necessary, a middle value 2^{L-1} of all the possible values for any texture pixel may be used based on the channel characteristics, wherein L is the number of bits assigned for each pixel. For example, if L is equal to 8, there are 256 texture pixels 0 to 255 and the middle value is determined to be 128.

To cope with a VOP of fast motion, the padding must be further extended to blocks which stretch outside the VOP but are immediately next to any boundary block. If the reconstructed block is determined as the exterior block at step S204, at step S207, it is determined whether the exterior block is adjacent to any extrapolated boundary block. If the exterior block is adjacent to no extrapolated boundary block, at step 209, no padding is performed and the process goes to step S211.

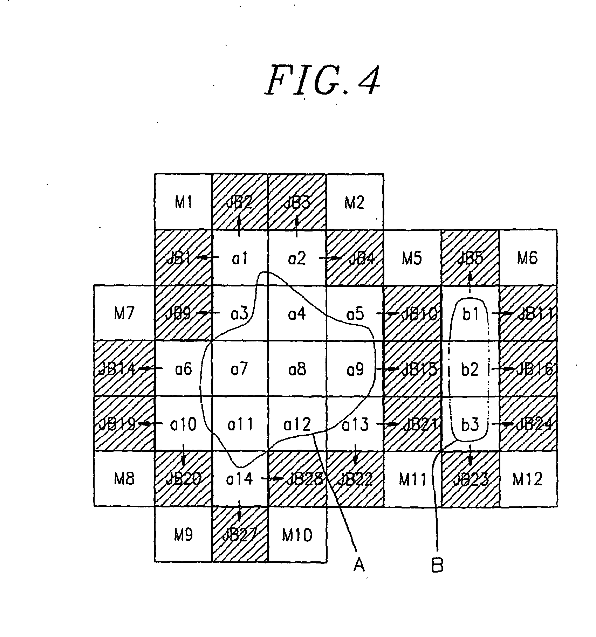

If the exterior block is adjacent to one or more extrapolated boundary blocks so that the exterior block corresponds to an undefined adjacent block, at step S208, the undefined texture pixels in the undefined adjacent block are padded based on one of the extrapolated boundary blocks to generate an extrapolated adjacent block for the undefined adjacent block, wherein each extrapolated boundary block has a part of the contour A or B of the current VOP and each undefined adjacent block is shown as a shaded region as shown in Fig. 4. If a plurality of extrapolated boundary blocks surround the undefined adjacent block, an extrapolated boundary block is selected in priority sequence of the leftward, upward, rightward and downward based on the undefined adjacent block and then a vertical or a horizontal border of the selected extrapolated boundary block is repeated rightwards, downwards, leftwards or upwards, wherein the vertical or the horizontal border adjoins the undefined adjacent block. As shown in Fig. 4, the undefined adjacent blocks JB4, JB20, JB9 and JB2 select their respective leftward, upward, rightward and downward extrapolated boundary blocks a2, a10, a3 and a1, respectively; and a rightmost vertical border of the extrapolated boundary block a2 is expanded rightward to fill the undefined adjacent block JB4, a lowermost horizontal border of the extrapolated boundary block a10 is expanded downward to fill the undefined adjacent block JB20 and so on. Also, undefined diagonal blocks such as M1 and M2 may be padded with a constant value, e.g., '128' to be the extrapolated adjacent block for the undefined diagonal block, wherein each undefined diagonal block is diagonally adjacent to the extrapolated boundary block and has all undefined texture pixels.

As described above, at step S211, the modified top and bottom field blocks, i.e, the extrapolated boundary and the extrapolated adjacent blocks as well as the interior blocks are provided as another previous interlaced texture information for the subsequent current VOP.

## Claims

1. An apparatus for encoding interlaced texture information on a texture macroblock basis using a field block prediction between a current VOP and a reference VOP , the apparatus comprising:
a motion estimator (116) for determining a field motion vector for each current top or bottom field block on a field-by-field basis;
a motion compensator (118) for providing the optimum candidate field block as a predicted top or bottom field block for each current top or bottom field block;
a subtractor (104) for subtracting the predicted top or bottom field block from each current top or bottom field block on a corresponding pixel-by-pixel basis to obtain the error field block;
a texture encoding circuit (106) for discrete-cosine-transforming the error field block on a DCT block-by-DCT block basis, and quantizing the discrete cosine-transformed coefficients;
a statistical encoding circuit (108) for performing a statistical encoding on the quantized coefficient fed from the texture encoding circuit (106) and the field motion vector for each current top or bottom field block fed from the motion estimator (116);
a texture reconstruction circuit (110) performing an inverse quantization and inverse transform on the quantized transform coefficients to obtain a reconstructed error field block ;
an adder (112) for combining the reconstructed error field block from the texture reconstruction circuit (110) and the predicted top or bottom field block from the motion compensator (118) on a pixel-by-pixel basis; and
a previous frame processing circuit (114) for padding a reconstructed top or bottom field block based on shape information for the current VOP, to thereby store the padded top or bottom field blocks as reference interlaced texture information, the reference frame processing circuit comprising:
a first padding device for padding the undefined texture pixel in a row of the field block having at least one defined texture based on one or more of the defined texture pixels in said row,
a second padding device for padding the undefined texture pixel in a row of the field block having at least one defined texture based on one or more of the defined texture pixels in one or more rows in said field block, and
a third padding device for padding the field block of boundary VOP having only the undefined texture pixels with a constant value.

2. The apparatus of claim 1, wherein the reference frame processing circuit (114) further comprises:
an adjacent macroblock padding circuit for expanding an undefined adjacent macroblock based on the padded boundary macroblock, wherein the undefined adjacent macroblock is adjacent to the padded boundary macroblock and has only undefined texture pixels, and
a remaining macroblock padding circuit for padding the exterior macroblock not adjacent to the padded boundary macroblock with a constant value.

3. The apparatus of claim 2, wherein the adjacent macroblock padding circuit includes:
a selector for selecting, if said undefined adjacent block is surrounded by a plurality of padded boundary macroblocks, one of the left, the upper, the right and the below extrapolated boundary macroblocks of said undefined adjacent macroblock in this priority, and
means for replicating a vertical border or a horizontal border of the selected padded boundary macroblock rightwards, downwards, leftwards or upwards.

4. The apparatus of claim 1, wherein the constant value is 2^{L}-¹, and L is a number of bits assigned for each pixel.

5. The apparatus of claim 1, wherein said padding of the field block with a constant value includes padding said field block with a constant value of 128.

## Patentansprüche

1. Vorrichtung zur Kodierung von Zeilensprung-Texturinformation auf einer Textur-Makroblock-Basis unter Verwendung einer Teilbild-Block-Vorhersage zwischen einer laufenden Video-Objektfläche VOP und eine Referenz-VOP, wobei die Vorrichtung folgendes umfasst:
eine Bewegungsschätzeinrichtung (116) zum Bestimmen eines Halbbild-Bewegungsvektors für jeden laufenden oberen oder unteren Halbbild-Block auf einer Halbbild-um-Halbbild-Basis;
einen Bewegungskompensator (118) zum Bereitstellen des optimalen Halbbild-Block-Kandidaten als einen vorhergesagten oberen oder unteren Halbbild-Block für jeden laufenden oberen oder unteren Halbbild-Block;
einen Subtrahierer (104) zum Subtrahieren des vorhergesagten oberen oder unteren Halbbild-Blocks von jedem laufenden oberen oder unteren Halbbild-Block auf einer Basis korrespondierender Pixel um Pixel, um einen Fehler-Halbbild-Block zu erhalten;
eine Textur-Kodierungsschaltung (106) für eine Diskrete-Cosinus-Transformierung des Fehler-Halbbild-Blocks auf einer DCT-Block-um-DCT-Block-Basis und zum Quantisieren der der Diskrete-Cosinus-Transformierung unterzogenen Koeffizienten;
eine Statistische-Kodierung-Schaltung (108) zur Durchführung einer statistischen Kodierung mit den von der Textur-Kodierungsschaltung (106) zugeführten quantisierten Koeffizienten und dem von der Bewegungsschätzeinrichtung (116) zugeführten Halbbild-Bewegungsvektor für jeden laufenden oberen oder unteren Halbbild-Block;
eine Textur-Rekonstruktionsschaltung (110) zum Durchführen einer inversen Quantisierung und inversen Transformierung mit den quantisierten Transformierungskoeffizienten, um einen rekonstruierten Fehler-Halbbild-Block zu erhalten;
einen Addierer (112) zum Kombinieren des rekonstruierten Fehler-Halbbild-Blocks von der Textur-Rekonstruktionsschaltung (110) und des vorhergesagten oberen oder unteren Halbbild-Blocks vom Bewegungskompensator (118) auf einer Pixel-um-Pixel-Basis; und
eine Verarbeitungsschaltung (114) für das vorhergehende Vollbild zum Auffüllen eines rekonstruierten oberen oder unteren Halbbild-Blocks basierend auf Gestaltinformation für die laufende VOP, um dabei die aufgefüllten oberen oder unteren Halbbild-Blöcke als Referenz-Zeilensprung-Texturinformation zu speichern, wobei die Referenz-Vollbild-Verarbeitungsschaltung folgendes umfasst:
eine erste Auffülleinrichtung zum Auffüllen des undefinierten Texturpixels in einer Zeile des Halbbild-Blocks, die mindestens eine definierte Textur aufweist, basierend auf einem oder mehreren der definierten Texturpixel in der Zeile,
eine zweite Auffülleinrichtung zum Auffüllen des undefinierten Texturpixels in einer Zeile des Halbbild-Blocks, die mindestens eine definierte Textur aufweist, basierend auf einem oder mehreren der definierten Texturpixel in einer oder mehreren Zeilen in dem Halbbild-Block, und
eine dritte Auffülleinrichtung zum Auffüllen des Halbbild-Blocks einer Begrenzungs-VOP, die nur undefinierte Texturpixel aufweist, mit einem konstanten Wert.

2. Vorrichtung nach Anspruch 1, bei der die Referenz-Vollbild-Verarbeitungsschaltung (114) weiterhin umfasst:
eine Nachbar-Makroblock-Auffüllschaltung zum Erweitern eines undefinierten benachbarten Makroblocks basierend auf dem aufgefüllten Begrenzungsmakroblock, wobei der undefinierte benachbarte Makroblock dem aufgefüllten Begrenzungsmakroblock benachbart ist und nur undefinierte Texturpixel aufweist, und
eine Rest-Makroblock-Auffüllschaltung zum Auffüllen des dem aufgefüllten Begrenzungsmakroblocks nicht benachbarten äußeren Makroblocks mit einem konstanten Wert.

3. Vorrichtung nach Anspruch 2, bei der die Nachbar-Makroblock-Auffüllschaltung folgendes enthält:
eine Auswahleinrichtung zum Auswählen, wenn der undefinierte benachbarte Block von einer Anzahl von aufgefüllten Begrenzungsmakroblöcken umgeben ist, eines von dem linken, dem oberen, dem rechten und dem unteren extrapolierten Begrenzungsmakroblock des undefinierten benachbarten Makroblocks mit dieser Priorität, und
eine Einrichtung zum Nachbilden einer vertikalen Grenze oder einer horizontalen Grenze des ausgewählten aufgefüllten Begrenzungsmakroblocks nach rechts, abwärts, links oder aufwärts.

4. Vorrichtung nach Anspruch 1, bei der der konstante Wert 2^{L-1} ist, und L die Anzahl von für jedes Pixel zugewiesenen Bits ist.

5. Vorrichtung nach Anspruch 1, bei der das Auffüllen des Halbbild-Blocks mit einem konstanten Wert ein Auffüllen des Halbbild-Blocks mit einem konstanten Wert von 128 umfasst.

## Revendications

1. Appareil d'encodage d'informations de texture entrelacées sur une base macrobloc de texture en utilisant une prédiction de bloc de champ entre un plan d'objet vidéo (VOP) courant et un VOP de référence, l'appareil comprenant :
un estimateur de mouvement (116) pour déterminer un vecteur de champ de mouvement pour chacun des blocs de champ supérieur ou inférieur courants sur une base champ par champ ;
un compensateur de mouvement (118) pour fournir le bloc de champ candidat optimum comme un bloc de champ supérieur ou inférieur prédit pour chacun des blocs de champ supérieur ou inférieur courant ;
un soustracteur (104) pour soustraire le bloc de champ supérieur ou inférieur prédit de chacun des blocs de champ supérieur ou inférieur courant sur une base pixel par pixel correspondante pour obtenir le bloc de champ d'erreur ;
un circuit d'encodage de texture (106) pour effectuer la transformée en cosinus discrète (DCT) du bloc de champ d'erreur sur une base de bloc DCT bloc par DCT, et quantifier les coefficients de transformée en cosinus discrète ;
un circuit d'encodage statistique (108) pour réaliser un encodage statistique sur le coefficient quantifié délivré par le circuit d'encodage de texture (106) et le vecteur de champ de mouvement pour chaque bloc de champ supérieur ou inférieur courant délivré par l'estimateur de mouvement (116) ;
un circuit de reconstruction de texture (110) réalisant une quantification inverse et une transformée inverse sur les coefficients de transformée quantifiés pour obtenir un bloc de champ d'erreur reconstruit ;
un additionneur (112) pour combiner le bloc de champ d'erreur reconstruit par le circuit de reconstruction de texture (110) et le bloc de champ supérieur ou inférieur prédit par le compensateur de mouvement (118) sur une base pixel par pixel ; et
un circuit de traitement de trame précédente (114) pour intercaler un bloc de champ supérieur ou inférieur reconstruit basé sur des informations de forme pour le VOP courant, pour stocker ainsi les blocs de champ supérieur ou inférieur intercalés comme informations de texture entrelacées de référence, le circuit de traitement de trame de référence comprenant :
un premier dispositif d'intercalage pour intercaler le pixel de texture indéfinie dans une ligne du bloc de champ comportant au moins une texture définie basée sur un ou plusieurs des pixels de texture définie dans ladite ligne,
un second dispositif d'intercalage pour intercaler le pixel de texture indéfinie dans une ligne du bloc de champ comportant au moins une texture définie basée sur un ou plusieurs des pixels de texture définie dans une ou plusieurs lignes dans ledit bloc de champ, et
un troisième dispositif d'intercalage pour intercaler le bloc de champ de VOP de frontière ne comportant que les pixels de texture indéfinie avec une valeur constante.

2. Appareil selon la revendication 1, dans lequel le circuit de traitement de trame de référence (114) comprend en outré :
un circuit d'intercalage de macrobloc adjacent pour étendre un macrobloc adjacent indéfini basé sur le macrobloc frontière intercalé, où le macrobloc adjacent indéfini est adjacent au macrobloc frontière intercalé et ne contient que des pixels de texture indéfinie, et
un circuit d'intercalage de macrobloc restant pour intercaler le macrobloc extérieur non adjacent au macrobloc frontière intercalé avec une valeur constante.

3. Appareil selon la revendication 2, dans lequel le circuit d'intercalage de macrobloc adjacent comprend :
un sélecteur pour sélectionner, si ledit bloc adjacent indéfini est entouré par une pluralité de macroblocs frontière intercalés, l'un des macroblocs frontière extrapolés gauche, supérieur, droit et inférieur dudit macrobloc adjacent indéfini dans cet ordre, et
un moyen pour reproduire une frontière verticale ou une frontière horizontale du macrobloc frontière intercalé sélectionné vers la droite, vers le bas, vers la gauche ou vers le haut.

4. Appareil selon la revendication 1, dans lequel la valeur constante est 2^{L-1}, et L est un nombre de bits attribué à chaque pixel.

5. Appareil selon la revendication 1, dans lequel ledit intercalage du bloc de champ avec une valeur constante comprend l'intercalage dudit bloc de champ avec une valeur constante de 128.
